# FASCICULE DE BREVET EUROPEEN

(11) **EP 0 638 344 B1**
(45) Date de publication et mention de la délivrance du brevet: **02.05.1997**
(21) Numéro de dépôt: 94401771.4
(22) Date de dépôt: 01.08.1994
(51) Int. Cl.: A63F 9/22, G06F 19/00, G06F 161/00

(54) **Système sécurisé de participation à des jeux interactifs avec vérification de la chronologie d'évènements**
Sicheres Teilnahmesystem für interaktive Spiele mit Überprüfung der zeitlichen Ereignisfolge
Secure system for interactive game participation with verification of event chronology

(30) Priorité: 05.08.1993 FR 9309679
(43) Date de publication de la demande: 15.02.1995
(73) Titulaire: GEMPLUS CARD INTERNATIONAL, F-13420 Gemenos (FR)
(72) Inventeur: Peyret, Patrice, F-94230 Cachan (FR)
(74) Mandataire: Schmit, Christian Norbert Marie

(56) Documents cités:
- EP-A- 0 399 897
- WO-A-90/04439
- WO-A-92/10806
- US-A- 4 592 546

## Description

L'invention concerne un système sécurisé de participation à des jeux interactifs à distance avec vérification de la chronologie d'événements.

Avec l'arrivée des systèmes de télévision dite interactive, il est souhaitable de permettre à des téléspectateurs de participer à des jeux où il leur est demandé par exemple de répondre lors d'une émission à des questions diffusées à l'antenne.

Lors de tels jeux, un temps maximum limite de réponse doit être imposé afin d'empêcher que le téléspectateur ne réponde après que la solution au jeu n'ait été donnée à l'antenne, ou n'ait été recherchée par le spectateur dans une encyclopédie ou tout autre base de données de référence.

Il est également souhaitable que la réponse du spectateur ne soit pas remontée en temps réel au fournisseur de service (opérateur de câble, studio d'émission...) afin de ne pas "saturer" celui-ci par des milliers de réponses simultanées. Pour ce faire, un système de "store and forward" est indispensable, où la réponse du téléspectateur est stockée à son domicile de façon sécurisée à bord d'un appareil grand-public (décodeur de câble, appareil de jeu dédié...), puis remontée plus tard à des heures convenablement étalées, par voie téléphonique hertzienne, câble ou par tout autre moyen de télécommunication approprié.

Il existe des exemples de tels systèmes développés aux Etats Unis par exemple par la société Interactive Game Networks, où les spectateurs disposent d'un petit appareil de jeu muni d'une interface radio, d'un clavier, d'un écran, d'un modem, et d'un module de sécurité.

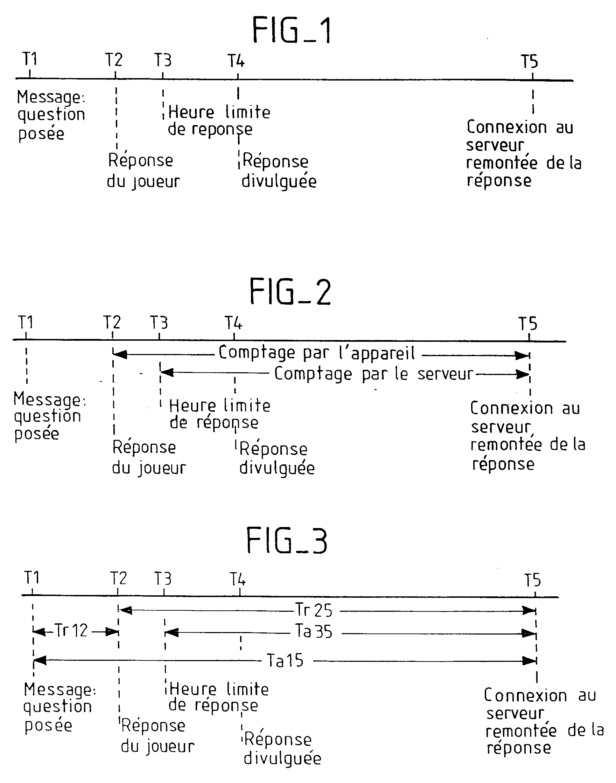

On peut se reporter au schéma de la Figure 1 représentant un diagramme de la chronologie des événements pour comprendre le fonctionnement d'un tel système.

Les questions sont diffusées à un instant T1 depuis un centre Emetteur/Serveur que l'on désignera par la suite "serveur". Ces questions sont diffusées par radio à destination de ces appareils; par exemple, au début d'un match de football, les téléspectateurs sont invités à deviner le nombre de points marqués à la mi-temps. La question s'affiche sur l'écran des appareils; la réponse est entrée par chaque téléspectateur participant à l'instant T2, grâce au clavier de son appareil et est enregistrée dans une puce sécurisée (du type de celles utilisées pour les "Smart Cards") montée à bord du même appareil. Quelques minutes après avoir posé la question, à l'instant T3, un nouveau signal diffusé bloque l'ensemble du parc des appareils pour qu'ils n'acceptent plus de réponse. La réponse à la question est diffusée à l'instant T4 (en fait T4 est l'heure de la mi-temps dans cet exemple). La réponse enregistrée est remontée plus tard, à l'instant T5, au serveur de jeu par le modem à travers le réseau téléphonique commuté et sert de preuve de participation. En cas de bonne réponse, le téléspectateur peut se voir offrir des gains.

Dans certaines propositions d'implémentation comme celle décrite dans le brevet U.S. 4 592 546, un circuit d'horloge suffisamment précis situé à l'intérieur de l'appareil de jeu permet de dater chacun des événements. Lorsque les réponses du joueur sont remontées au serveur de jeu, les temps enregistrés par l'appareil sont fournis au serveur et comparés par celui-ci aux temps de référence qu'il a maintenu.

Dans d'autres propositions d'implémentation, chaque appareil grand public de jeu est muni d'un circuit électronique d'horloge temps réel synchronisé à intervalles réguliers (par exemple par liaison radio) avec une horloge de référence émise par le centre serveur de jeux.

L'heure T1 à laquelle la question est diffusée et l'heure T2 à laquelle la réponse est faite sont enregistrées dans l'appareil (par exemple de façon sécurisée à l'intérieur d'une puce pour Smart Card).

Lors de la connexion au serveur de jeu, la réponse ainsi que les heures enregistrées sont remontées comme preuve de participation. Le serveur vérifie que l'heure T1 remontée est dans une fourchette de tolérance acceptable, et que T2 est inférieure à T3, heure limite acceptée pour les réponses.

### INCONVENIENTS DES SYSTEMES ACTUELS

Dans les systèmes précités, ou dans d'autres implémentations similaires, un utilisateur mal intentionné peut très bien enregistrer sur un appareil approprié les signaux de contrôle destinés à son appareil de jeu (questions, ordres de blocage, signaux de synchronisation d'horloge).

Il peut ensuite, en léger différé, une fois que la réponse à la question a été diffusée à l'antenne ou est connue de lui par recherche spécifique ou tout autre moyen, rejouer les signaux de contrôle à son appareil et simuler ainsi une réponse en temps réel. Ceci est rendu possible parce que le fraudeur se trouve sans témoin dans l'intimité de son foyer, et qu'il s'écoule toujours un temps raisonnablement suffisant entre la fin du jeu et la remontée prévue des réponses au centre serveur. Enfin, l'appareil de jeu ne peut pas disposer économiquement d'un moyen lui permettant de savoir si les signaux qu'il reçoit du monde extérieur, et qui sont sensés sécuriser les réponses sont bien générés en temps réel, ou s'ils lui sont fournis avec un léger retard après avoir été enregistrés sans modification.

Dans le brevet déposé en France sous le numéro 89 06848 et publié sous le numéro 2 647 619 et l'addition numéro 90 01512 publiée sous le numéro 2 658 375, il est décrit un système pouvant éviter cette fraude par jeu différé, dans lequel:
- le centre serveur compte le temps absolu s'écoulant entre l'instant dénommé T3 de la diffusion de la réponse (ou le temps limite autorisé pour donner la réponse) et l'instant T5 de remontée des réponses par les téléspectateurs au centre serveur.
- la réponse du téléspectateur déclenche à l'instant T2 le début d'un comptage de temps local dans l'appareil.
- au moment de T5 de la remontée des informations au centre serveur, le serveur vérifie que le temps T5-T2 compté par l'appareil au domicile du joueur est bien supérieur au temps absolu T5-T3 qu'il a calculé lui-même.

Le chronogramme représenté par le schéma de la figure 2 illustre ces séquences.

La solution proposée dans ce brevet n'est pas malheureusement infaillible car l'utilisateur peut, par accélération du compteur local, faire croire qu'un temps T5-T2 plus long s'est écoulé entre la réponse et la connexion au serveur que le temps réellement écoulé. Ceci est possible par simple modification temporaire de la fréquence d'oscillation du circuit électronique d'horloge situé dans l'appareil de jeu.

En effet, le compteur situé dans l'appareil est accessible à l'utilisateur, à moins qu'il ne soit sécurisé physiquement, c'est à dire par exemple noyé dans une résine. Que ce circuit soit alimenté par un oscillateur à réseau RC, à résonateur céramique, ou à quartz, il est possible d'en faire dévier la fréquence naturelle en désaccordant légèrement l'élément oscillant. Il est possible ainsi d'accélérer ou de ralentir l'oscillateur de quelques pourcents sans difficulté.

En accélérant l'oscillateur qui alimente le circuit d'horloge de l'appareil de jeu, il est possible pour un fraudeur d'attendre au-delà du temps limite T3 (par exemple pour attendre que la réponse soit diffusée à l'antenne), puis d'accélérer l'oscillateur de l'appareil pour rattraper le retard pris. Ainsi, quand son appareil sera interrogé par le serveur à l'instant T5, le temps apparent T5-T2 fourni au serveur sera plus grand qu'en réalité.

Il est connu d'équiper certains microprocesseurs pour cartes à micro-circuit de détecteurs de fréquence d'horloge pour détecter les anomalies sur cette fréquence d'horloge. Ce genre de détecteur se déclenche quand la fréquence de l'horloge qui alimente le composant est trop basse, afin d'éviter par exemple qu'un fraudeur cherche à faire du "pas à pas" dans le programme exécuté par le processeur. Typiquement, un tel détecteur de fréquence basse se déclenche en-dessous d'environ 500 KHz lorsque la fréquence nominale du composant est située entre 1 MHz et 5 MHz. L'imprécision importante de ce genre de détecteur et le fait qu'ils n'existent que pour détecter des fréquences trop basses ne permettent pas de les utiliser pour pallier au type de fraude précité.

L'invention a pour but de remédier aux inconvénients des systèmes actuels.

En effet le système dont l'invention est l'objet permet de vérifier de façon sécurisée que le téléspectateur a bien répondu aux questions posées entre l'instant où ces questions sont posées et un instant limite décidé par l'émetteur du jeu.

Le système proposé repose sur le comptage par un processeur sécurisé (par exemple de carte à microcircuit) d'intervalles de temps consécutifs dont le premier est initialisé par un message cryptographiquement sécurisé envoyé par l'émetteur, et le dernier est terminé par une connexion de l'appareil de jeu au serveur de l'émetteur pour y faire remonter la preuve de la réponse.

La présente invention a plus particulièrement pour objet un système sécurisé de participation à des jeux interactifs à distance comportant un centre serveur d'émission émettant des messages cryptographiques reçus par des récepteurs de télévision pendant le déroulement du programme de télévision et dans lequel des spectateurs disposent d'un appareil de jeu capable de lire les messages télévisés et de renvoyer une réponse aux questions posées dans ces messages, caractérisé en ce que l'appareil de jeu comporte des moyens de comptage d'un intervalle de temps Tr12 défine par l'instant T1 de transmission d'un message envoyé par le centre serveur d'emission et l'instant T2 de réponse du spectateur et d'un intervalle de temps Tr25 définie par l'instant T2 de réponse du spectateur et l'instant T5 de remontée de la réponse au serveur; en ce que le serveur comporte des moyens de comptage d'une durée Ta35 définie par l'instant T3 de limite de réponse et par l'instant T5 de remontée de la réponse et d'une durée Ta15 définie par l'instant T1 de transmission du message et l'instant T5 de remontée des réponses et en ce qu'il comporte en outre des moyens de calcul permettant la vérification des relations suivantes :
Tr25 > Ta35
et Tr12 + Tr25 = Ta15 ± tolérances predeterminées,
et étant aptes à rejeter la réponse lorsque ces relations ne sont pas vérifiées.

Les moyens de comptage de l'appareil de jeu sont réalisés par un microprocesseur sécurisé piloté par une horloge mettant en oeuvre un programme de comptage d'impulsions d'horloge.

Les moyens de comptage de l'appareil de jeu sont réalisés par des moyens de calcul pilotés par une horloge interne mettant en oeuvre un programme de comptage d'impulsions d'horloge.

L'invention concerne également un appareil pour la participation à des programmes télédiffusés et de certification de la participation en liaison avec un serveur distant comprenant :
- des moyens de réception d'informations numériques en provenance du serveur,
- des moyens d'interface pour l'introduction par un participant, des données représentatives de sa participation,
- des moyens d'établissement d'une connexion au serveur,
- au moins un composant électronique sécurisé comprenant un microprocesseur et ses moyens de mémorisation,
- au moins un circuit de génération de signal d'horloge principalement caractérisé en ce que:
- les moyens de réception sont adaptés pour reçevoir à un instant T1, un message numérique de forme prédéterminée, et, lors de sa reçeption, de le transmettre au microprocesseur sécurisé;
- le microprocesseur sécurisé est adapté pour vérifier l'authenticité de ce message, pour l'enregistrer dans sa mémoire, et pour entreprendre de compter des unités de temps proportionnelles à la période du signal d'horloge qui lui est fourni par le circuit de génération de signal d'horloge,
- les moyens d'interface sont adaptés pour recevoir à un instant T2, du téléspectateur détenant cet appareil, les données de sa participation, et pour les transmettre au microprocesseur sécurisé qui est adapté pour les enregistrer sous une forme requise dans sa mémoire et pour enregistrer également la valeur de comptage de temps à ce moment-là puis calculer et enregistrer l'intervalle Tr12 entre T1 et T2;
- le microprocesseur sécurisé est adapté pour continuer le comptage jusqu'à ce que l'appareil ait été mis en contact par les moyens d'établissement d'une connexion avec le serveur à un instant T5, et pout calculer et enregistrer l'intervalle de temps Tr25 entre T2 et T5,
- le microprocesseur sécurisé est adapté pour, dès l'établissement de la connexion, transmettre les données de participation mémorisées et les intervalles de temps Tr12 et Tr25 afin que le serveur vérifie si ces intervalles sont compatibles avec son propre calcul de l'intervalle Ta15 entre T1 et T5 et rejette la réponse si ce n'est pas le cas.

L'invention concerne également un dispositif informatique serveur destiné à gérer la participation d'une audience de téléspectateurs à des scenarii télédiffusés, les téléspectateurs comportant pour cela des appareils électroniques individuels de participation capable de lire les messages télédiffusés, et de renvoyer les réponses des téléspectateurs aux questions posées dans ces messages, le dispositif comprenant:
- des moyens de comptage de temps,
- des moyens de diffusion de messages numériques à l'attention des appareils électroniques individuels de participation,
- des moyens d'établissement d'une connexion aux appareils électroniques individuels de participation,
- des moyens de traitement de mémorisation
- des moyens de calcul et de vérification, caractérisé en ce que:
- les moyens de diffusion sont adaptés pour, au moment d'initialiser un nouveau scenario télédiffusé, diffuser à l'instant T1 par un canal de transmission approprié, un message numérique à destination des appareils individuels des téléspectateurs et pour initialiser et déclencher les moyens de comptage de temps,
- les moyens de traitement demémorisation sont adaptés pour mémoriser au moment T3 prédéterminé, choisi comme étant le moment où l'audience ne doit plus participer au scenario, la valeur de comptage de temps et continuer ce comptage,
- les moyens de calcul et de vérification sont adaptés pour reçevoir les intervalles Tr12 et Tr25 calculées par chaque appareil de participation au moment T5 choisi comme étant le moment où l appareil réspectif se connecte au serveur, et vérifier les relations suivantes ;
   Tr25 > Ta35
   et Tr12 + Tr25 = Ta15 ± tolérances prédeterminées dans lesquelles :
   - Tr25: est l'intervalle de temps calculée par l'appareil entre T2 et T5,
   - Tr12: est l'intervalle de temps calculée par l'appareil entre T1 et T2,
   - Ta35: est l'intervalle de temps calculée par le serveur entre T3 et T5,
   - Ta15: est l'intervalle de temps calculée par le serveur entre T1 et T5; et pour rejetter la réponse du téléspectateur respectif si les relations ne sont par verifiées.

Chaque appareil de jeu est muni d'un microprocesseur sécurisé pour carte à micro-circuit. Selon un autre mode de réalisation, le micro-circuit peut être présent dans une carte au format des cartes bancaires, enfichée dans l'appareil, l'appareil faisant office alors de lecteur de carte, tels que les lecteurs que l'on trouve dans le commerce.

Le circuit sécurisé peut alternativement être enrobé dans un objet portable autre qu'une carte, comme par exemple une clé en plastique ou tout autre objet jugé approprié.

Le circuit sécurisé peut également, comme dit précédemment, être installé directement à bord de la circuiterie principale de l'appareil, si on juge qu'il n'est pas nécessaire qu'il soit détachable.

Par microprocesseur sécurisé, il est compris tout microprocesseur protégé tel que dans les applications de "Smart Cards", comme par exemple les cartes bancaires fournies actuellement par les banques.

D'autres avantages de l'invention apparaîtront à la lecture de la description qui va suivre et qui est faite à titre illustratif et non limitatif en regard des dessins sur lesquels :
- la figure 1, représente un chronogramme de la chronologie des événements du jeu;
- la figure 2, représente un chronogramme tel que représenté sur la figure 1, indiquant les séquences de comptage selon l'art antérieur;
- la figure 3, représente un chronogramme tel que représenté sur la figure 1, indiquant les séquences de comptage selon l'invention ;
- la figure 4, représente un schéma de principe du système de jeux,
- la figure 5, représente un schéma détaillé d'un composant sécurisé selon l'invention;
- la figure 6, représente un schéma de réalisation d'un appareil selon un mode de réalisation particulier.

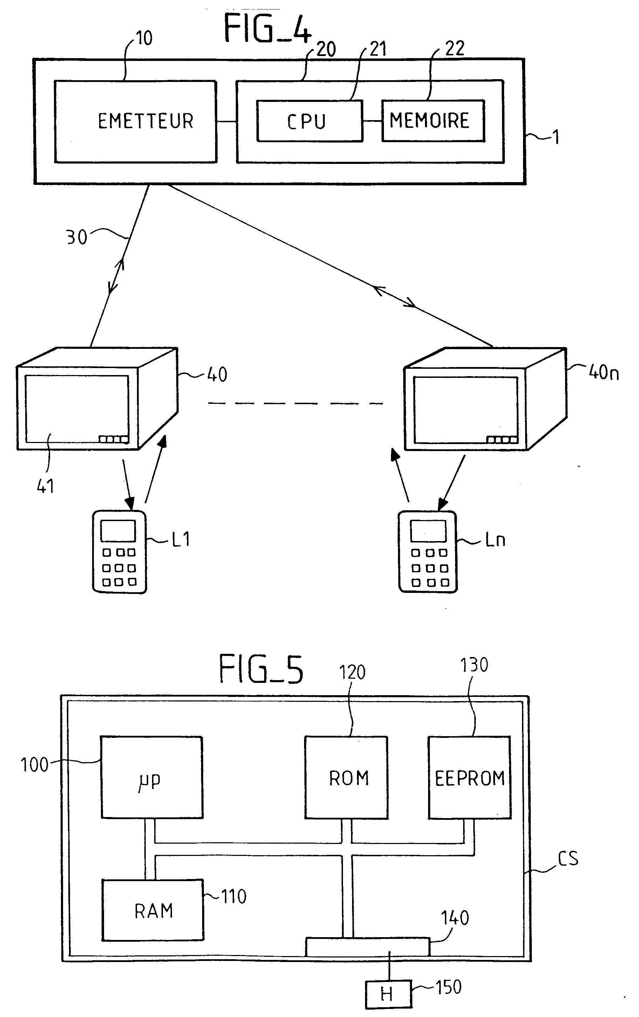

Le schéma de la figure 4, illustre un système sécurisé de participation à des jeux permettant de mettre en oeuvre les séquences décrites dans la suite et représentées sur le Tableau A annexé à la description. Le système comprend un émetteur/serveur (1) incluant un ensemble 10 émetteur de programme de télévision et un ensemble serveur 20 en liaison avec l'émetteur 10 et apte à envoyer des messages de jeux sous forme cryptée tels que décrit, par exemple, dans les demandes de brevet précédemment citées.

L'émetteur/serveur sont reliés par des moyens de transmission 30 avec des postes récepteurs placés chez les utilisateurs. Les utilisateurs désirant participer à des jeux télédiffusés disposent d'appareils L1... Ln pouvant lire les messages codés sur les récepteurs et se connecter au serveur d'une manière classique.

Au moment T1 où le message est émis, c'est-à-dire où la question est posée au spectateur, le centre d'émission Emetteur/serveur de jeux 1 envoie aux appareils de jeu L1, Ln un message cryptographique, par exemple signé avec une clé secrète d'exploitation, connue des cartes.

L'envoi de ce message peut se faire par un canal de transmission 30 qui peut être une voie de données dédiée située:
- soit dans le même canal que le signal télévisé (par exemple dans le retour trame)
- soit dans un canal séparé du même médium (par exemple voie HF dédiée sur le câble qui achemine par ailleurs les canaux de télévision)
- soit dans un canal sur un médium différent (par exemple un canal radio FM comme dans le système d'Interactive Game Networks aux Etats Unis)

La voie de données n'a besoin que d'être mono-directionnelle, allant de l'émetteur du signal et pourvoyeur de service aux téléspectateurs.

L'appareil de jeu L1, lorsqu'il reçoit ce signal, qui apparaît sous la forme d'un code sur l'écran 41 du récepteur de télévision 40, le transmet au composant sécurisé CS placé dans l'appareil ou sur un support amovible comme décrit dans la suite.

L'appareil est équipé d'une électronique connue telle que décrite dans les brevets cités précédemment par exemple, lui permettant de recevoir les massages apparaissant sur l'écran de télévision et de transmettre des messages réponse au serveur.

Le composant sécurisé CS est représenté sur la figure 5 et comprend un microprocesseur 100 muni de mémoires volatiles et non volatiles : mémoire de travail RAM 110, mémoire de programme ROM 120, mémoire de données EEPROM 130. Il reçoit d'un générateur de signal d'horloge 150 de l'appareil des impulsions d'horloge. Il comporte en outre des moyens de connexion à l'appareil symbolisés par l'ensemble 140. Lorsqu'un message apparaît sur l'écran le microprocesseur 100 reçoit ce message, vérifie son authenticité de façon usuelle et déclenche la mise en oeuvre d'un sous-programme de comptage de temps à partir des impulsions d'horloge, ce sous-programme étant contenu dans sa mémoire ROM 120.

En fait le microprocesseur sécurisé compte des unités de temps proportionnelles à la fréquence d'horloge 150 avec laquelle il est alimenté, et non pas un temps absolu, puisqu'il ne contient pas d'autre référence temporelle que ce signal d'horloge. Par ailleurs, le microprocesseur sécurisé 100 enregistre dans sa mémoire non-volatile EEPROM 130 le message cryptographique (ou une ombre de ce message) qui a déclenché le comptage.

On peut se reporter au tableau A annexé à la description pour mieux comprendre la suite :

Au moment T2 où le spectateur répond à la question, par l'intermédiaire de son appareil L1, cette réponse est transmise au microprocesseur sécurisé 100 qui l'enregistre dans sa mémoire non-volatile 130 et enregistre également la valeur du comptage de temps à laquelle il était parvenu au moment où il a reçu la réponse de l'utilisateur. Immédiatement après cet événement, le microprocesseur sécurisé 100 continue de compter.

T3 reste l'instant limite absolue de réponse à la question pour les téléspectateurs; rien de particulier ne se passe dans l'appareil à cet instant : il ne reçoit aucune information et le microprocesseur sécurisé continue à compter le temps.

A cet instant T3, le serveur équipé de moyens de traitement classiques 20, comprenant une unité centrale de traitement 21 et de mémoires 22 dont une est chargée d'un programme de comptage, commence lui-aussi un comptage de temps.

Le serveur étant central et servant de référence, ce comptage est appelé dans la suite "absolu"; le comptage utilisé est sensé être très stable et représenter la meilleure approximation possible du temps réel. T4 est l'instant absolu auquel la réponse à la question est donnée à l'écran pour les téléspectateurs. Rien ne se passe de particulier à ce moment.

La remontée des données spécifiques de chaque téléspectateur ayant participé au jeu se fait plus tard à l'instant T5, par exemple quelques heures après le jeu, par connexion des appareils de jeux 40, 40n au serveur 1. Comme beaucoup de téléspectateurs peuvent avoir participé, il est probable que les connexions soient programmées pour avoir lieu la nuit.

La connexion des appareils des téléspectateurs vers le serveur se fait par une "voie de retour" dont la direction est l'inverse de celle utilisée pour diffuser la voie donnée décrite plus haut. Cette voie de retour peut se trouver directement sur le câble de distribution, si la télévision est diffusée par câble bi-directionnel. La voie de retour peut également se faire sur le réseau téléphonique commuté par simple modem. D'autres voies de retour possibles peuvent être envisagées. La référence 30 sur le schéma de la figure 4 symbolise le ou les canaux de transmissions pouvant être prévus.

Quand la connexion est établie entre le serveur 1, et l'appareil L1, (Ln) du téléspectateur par un des moyens pré-cités, le microprocesseur sécurisé 100 peut commencer alors une procédure d'authentification classique pour authentifier le serveur et pour s'authentifier lui-même auprès du serveur. Les mécanismes éventuels d'authentification peuvent être basés indifféremment sur un système de cryptographie à clé secrète ou à clé publique connue sans rien changer à l'objet de l'invention.

Au cours de la connexion, le microprocesseur sécurisé 100 envoie au serveur la valeur de la réponse donnée par le téléspectateur et enregistrée au moment T2.

Selon l'invention, le microprocesseur 100 transmet également au serveur les valeurs Tr12 et Tr25 où:
- Tr12 est le temps "relatif" local calculé dans l'appareil du téléspectateur par le microprocesseur sécurisé entre T1 et T2 (tel que cela apparaît sur la figure 3).
- Tr25 est le temps "relatif" local calculé par ce même microprocesseur sécurisé entre T2 et T5 (tel que cela apparaît sur la figure 3).

La réponse du téléspectateur ainsi que les valeurs de temps calculées localement par l'appareil 1 peuvent être transmises avec un "checksum" cryptographique pour garantir leur intégrité, et peuvent éventuellement être chiffrées pour des raisons de confidentialité par tout algorithme de chiffrement connu. Ceci n'influence en rien le principe de l'invention.

Si on note:
- Ta15 le temps "absolu" calculé par le serveur entre T1 et T5 (tel que représenté sur la figure 3).
- Ta35 le temps "absolu" calculé par le serveur entre T3 et T5 (tel que représenté sur la figure 3).

Selon l'invention, le serveur vérifie alors que:
Tr25 > Ta35 d'une part, et que
Tr12 + Tr25 = Ta15 ± tolérances
les tolérances étant prédeterminées.

Si ces relations sont vérifiées, alors la réponse est acceptée, sinon le serveur la rejette.

Ainsi, si un fraudeur cherche à faire croire qu'il a répondu avant T3 alors qu'il a répondu en fait après, il faudrait qu'il accélère l'horloge 150 fournie à la carte entre T2 et T5 pour augmenter artificiellement la valeur de Tr25, mais ceci se détecterait car la somme Tr12 + Tr25 ne serait plus égale à Ta15 ± tolérance.

La seule fraude difficilement réalisable mais restant possible serait d'être capable de ralentir l'horloge fournie au microprocesseur sécurisé entre T1 et T2 d'une valeur exactement égale à la quantité dont l'horloge devrait être accélérée par la suite entre T2 et T5 afin de préserver à la somme Tr12 + Tr25 sa valeur légale. Pour rendre ceci impossible, il suffit de faire en sorte que l'instant T3 soit variable par rapport à l'instant T1 (c'est à dire que le temps laissé au spectateur pour répondre à la question soit variable d'une question à l'autre). Ainsi, le fraudeur ne peut pas prédire de combien il peut ralentir l'horloge entre T1 et T2 car il ne sait pas de combien il devra l'accélérer ensuite entre T2 et T5.

L'invention permet ainsi, en s'appuyant sur un microprocesseur sécurisé utilisé classiquement pour les Smart Cards et ne disposant pas d'une horloge de référence particulièrement précise ni elle-même sécurisée, de garantir la chronologie correcte des événements T1, T2, T3 et T5.

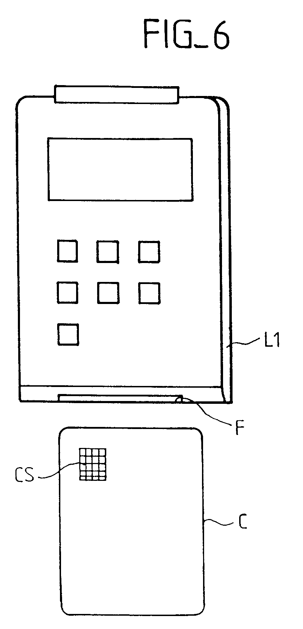

Sur la figure 6, on a représenté un mode de réalisation particulier de l'invention, dans lequel le composant sécurisé se présente sous la forme d'une puce de circuit intégré de carte à mémoire C. Ainsi, l'appareil comporte, d'une part la partie L1 permettant de se connecter au serveur, de lire les messages affichés sur l'écran et de rentrer la réponse du téléspectateur et une partie détachable, la carte à mémoire avec microprocesseur. La partie L1 comporte à cette fin une fente F lui permettant de recevoir la carte et un connecteur non visible adapté à celui de la carte pour lui permettre d'agir en lecteur de carte à mémoire.

Avec ce mode de réalisation, l'invention s'applique particulièrement bien aux systèmes de télévision à péage utilisant déjà une "Smart Card" pour assurer la sécurité du désembrouillage des signaux télévisés.

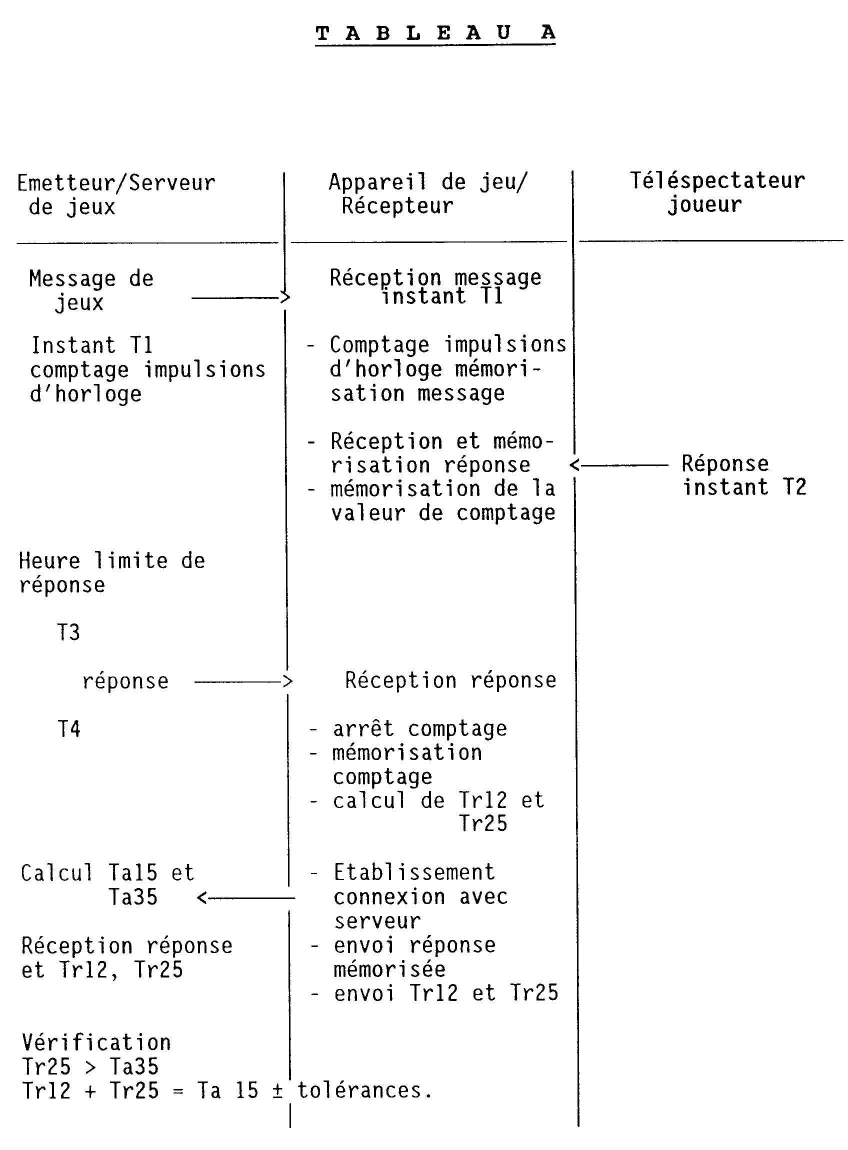

## Revendications

1. Système sécurisé de participation à des jeux interactifs à distance comportant un centre serveur d'émission (1) émettant des messages cryptographiques reçus par des récepteurs de télévision (40) pendant le déroulement du programme de télévision et dans lequel des spectateurs disposent d'un appareil de jeu (40, L1) capable de lire les messages télévisés et de renvoyer une réponse aux questions posées dans ces messages, caractérisé en ce que :
a) l'appareil de jeu (40, L1) comporte :
- des moyens de comptage (100, 150) de deux intervalles de temps consécutifs, le premier intervalle Tr12 étant défini par l'instant T1 de transmission d'un message envoyé par le centre serveur (1) et l'instant T2 de réponse du spectateur et le deuxième intervalle Tr25 étant défini par l'instant T2 de réponse du spectateur et l'instant T5 de remontée de la réponse au serveur (1),
- des moyens (30) pour transmettre la réponse avec ces résultats de comptage au serveur d'émission (1),
b) le serveur (1) comporte :
- des moyens de comptage (20) d'un intervalle de temps Ta35 défini par l'instant T3 de limite de réponse et par l'instant T5 de remontée de la réponse, et d'un intervalle de temps Ta15 défini par l'instant T1 de transmission du message et l'instant T5 de remontée de la réponse,
- des moyens (20) de calcul et de vérification permettant la vérification des relations suivantes :
Tr25 > Ta35
et Tr12 + Tr25 = Ta15 ± tolérances prédeterminées,
et pour rejeter la réponse lorsque ces relations ne sont pas vérifiées.

2. Système sécurisé de participation à des jeux interactifs à distance selon la revendication 1, caractérisé en ce que les moyens de comptage de l'appareil de jeu sont réalisés par un microprocesseur sécurisé (100) piloté par une horloge (150), mettant en oeuvre un programme de comptage d'impulsions d'horloge.

3. Système sécurité de participation à des jeux interactifs à distance selon la revendication 1, caractérisé en ce que les moyens de comptage de l'appareil de jeu sont réalisés par des moyens de calcul pilotés par une horloge interne, mettant en oeuvre un programme de comptage d'impulsions d'horloge.

4. Appareil pour la participation à des programmes télédiffusés et de certification de la participation en liaison avec un serveur (1) distant comprenant :
- des moyens (30) de réception d'informations numériques en provenance du serveur (1),
- des moyens d'interface (L1) pour l'introduction par un participant, des données représentatives de sa participation,
- des moyens (30) d'établissement d'une connexion au serveur,
- au moins un composant électronique sécurisé (C5) comprenant un microprocesseur (100) et ses moyens de mémorisation (110, 120, 130),
- au moins un circuit (150) de génération de signal d'horloge,
caractérisé en ce que:
- les moyens de réception sont adaptés pour reçevoir, à un instant T1, un message numérique de forme prédéterminée et, lors de sa réçeption, de le transmettre au microprocesseur sécurisé (100);
- le microprocesseur sécurise (100) est adapté pour vérifer l'authenticité de ce message, pour l'enregistrer dans sa mémoire, et pour entreprendre de compter des unités de temps proportionnelles à la période du signal d'horloge qui lui est fourni par le circuit (150) de génération de signal d'horloge,
- les moyens d'interface sont adaptés pour reçevoir à un instant T2, du téléspectateur détenant cet appareil, les données de sa participation, et pour les transmettre au microproceseur sécurisé (100) qui est adapté pour les enregistrer sous une forme requise dans sa mémoire et pour enregistrer également la valeur de comptage de temps à ce moment-là puis calculer et enregistrer l'intervalle Tr12 entre T1 et T2;
- le microprocesseur sécurisé (100) est adapté pour continuer le comptage jusqu'à ce que l'appareil (40, L1) ait été mis en contact par les moyens d'établissement d'une connexion (30) avec le serveur (1) à un instant T5, et pour calculer et enregistrer l'intervalle de temps Tr25 entre T2 et T5,
- le microprocesseur securisé est adapté pour, dès l'établissement de la connexion, transmettre les données de participation mémorisées et les intervalles de temps Tr12 et Tr25 afin que le serveur vérifie si ces intervalles sont compatibles avec son propre calcul de l'intervalle Ta15 entre T1 et T5, et rejette la réponse si ce n'est pas le cas.

5. Appareil (40, L1) pour la participation à des programmes télédiffusés selon la revendication 4, caractérisé en ce qu'il comprend des moyens de lecture de carte à puce (L1) et une carte à puce (C), la carte comportant le composant sécurisé sous la forme d'une puce de circuit intégré (C5) incluant un microprocesseur (100) et des mémoires (100, 110, 120) de travail et de programme.

6. Dispositif informatique serveur (1) destiné à gérer la participation d'une audience de téléspectateurs à des scenarii télé-diffusés, les téléspectateurs comportant pour cela des appareils électroniques individuels (40, L1) de participation capable de lire les messages télédiffusés, et de renvoyer les réponses des téléspectateurs aux questions posées dans ces messages, le dispositif (1) comprenant:
- des moyens (20) de comptage de temps,
- des moyens (10) de diffusion de messages numériques à l'attention des appareils électroniques individuels de participation (40, L1),
- des moyens (30) d'établissement d'une connexion aux appareils électroniques individuels de participation,
- des moyens (21, 22) de traitement de mémorisation,
- des moyens de calcul et de vérification (20),
caractérisé en ce que:
- les moyens de diffusion (10) sont adaptés pour, au moment d'initialiser un nouveau scénario télé-diffusé, diffuser à l'instant T1 par un canal de transmission (30) approprié, un message numérique à destination des appareils individuels (40, L1) des téléspectateurs et pour initialiser et déclencher les moyens (20) de comptage de temps,
- les moyens de traitement de mémorisation (21,22) sont adaptés pour mémoriser au moment T3 prédéterminé, choisi comme étant le moment où l'audience ne doit plus participer au scénario, la valeur de comptage de temps et continuer ce comptage,
- les moyens (20) de calcul et de verification sont adaptés pour reçevoir les intervalles Tr12 et Tr25 calculées par chaque appareil (40, L1) de participation au moment T5 choisi comme étant le moment où l'appareil réspectif se connecte au serveur, et vérifier les relations suivantes ;
Tr25 > Ta35
et Tr12 + Tr25 = Ta15 ± tolérances prédeterminées
dans lesquelles :
Tr25 est l'intervalle de temps calculée par l'appareil entre T2 et T5,
Tr12 est l'intervalle de temps calculée par l'appareil entre T1 et T2,
Ta35 est l'intervalle de temps calculée par le serveur entre T3 et T5,
Ta15 est l'intervalle de temps calculée par le serveur entre T1 et T5;
et pour rejeter la réponse du téléspectateur respectif si les relations ne sont pas vérifiées.

## Claims

1. Security-protected system for remote participation in interactive games comprising a transmitting server centre (1) transmitting cryptographic messages which are received by television receivers (40) during the broadcast of a television programme and wherein the viewers have a game device (40, L1) capable of reading the televised messages and sending back a reply to the questions asked in these messages, characterised in that:
a) the game device (40, L1) comprises:
- means (100, 150) for counting two consecutive time intervals, the first interval Tr12 being defined by the instant T1 at which a message is transmitted by the server centre and the instant T2 at which a reply is sent back by the viewer and the second interval Tr25 being defined by the instant T2 at which the viewer responds and the instant T5 at which the response is picked up by the server (1),
- means (30) for transmitting the response and these time-count results to the transmitting server (1),
b) the server (1) comprises:
- means for counting (20) a time interval Ta35 defined by the instant T3 marking the response and the instant T5 at which the response is picked up and a time interval Ta15 defined by the instant T1 at which the message is transmitted and the instant T5 at which the response is picked up,
- computing and verification means (20) for verifying the following relations:
Tr25 > Ta35
and Tr12 + Tr25 = Ta15 ± pre-set tolerances,
and for rejecting the response if these relations are not verified.

2. Security-protected system for remote participation in interactive games as claimed in claim 1, characterised in that the counting means of the game device consist of a security-protected micro-processor (100), which is driven by a clock (150) and implements a programme which counts clock pulses.

3. Security-protected system for remote participation in interactive games as claimed in claim 1, characterised in that the counting means of the game device consist of computing means which are driven by an internal clock and implement a programme which counts clock pulses.

4. Device enabling participation in television broadcasts and certification of such participation by AA link-up to a remote server (1) comprising:
- means (30) for receiving digital data from the server (1),
- interface means (L1) for the input by a participant of data representing his participation,
- means (30) for establishing a connection to the server,
- at least one security-protected electronic component (CS) having a micro-processor (100) and memory means (110, 120, 130) thereof,
- at least one clock-signal generating circuit (150), characterised in that:
- the receiver means are designed to receive, at an instant T1, a digital message in a pre-determined form and, on receipt thereof, communicate it to the security-protected micro-processor (100),
- the security-protected micro-processor (100) is designed to verify the authenticity of this message so as to record it in the memory thereof and to enable the counting of time units proportional to the clock signal communicated to it by the clock-signal generating circuit (150),
- the interface means are designed to receive, at an instant T2, from the viewer holding this device, the data pertaining to his participation and to communicate these to the security-protected micro-processor (100), which is designed to record them in a format requirement by its memory and to record in addition the value of the time-count up to that instant and then calculate and record the interval Tr12 between T1 and T2,
- the security-protected micro-processor (100) is designed to continue counting until the device (40, L1) has been placed in contact by the connection means (30) with the server (1) at an instant T5 and to calculate and record the time interval Tr25 between T2 and T5,
- the security-protected micro-processor (100) is so designed that, once connection has been established, it transmits the participation data stored in memory and the time intervals Tr12 and Tr25 so that the server can verify whether these intervals are compatible with its own calculations of the interval T15 between T1 and T5 and rejects the response if such is not the case.

5. Device (40, L1) for participating in televised programmes as claimed in claim 4, characterised in that it comprises chip-card reading means (L1) and a chip card (C), the card having the security-protection component in the form of an integrated chip circuit (Cs) incorporating a micro-processor (100) and working and programme memories (100, 110, 120).

6. Data-processing server device (1) designed for managing the participation of an audience of television viewers in televised scenarios, the television viewers requiring for this purpose individual electronic participation devices (40, L1) capable of reading messages broadcast by television and sending back replies from the television viewers in response to the questions asked in these messages, the device (1) comprising:
- means (20) for counting time,
- means (10) for broadcasting digital messages addressed to the individual electronic participation devices (40, L1),
- means (30) for establishing a connection with the individual electronic participation devices,
- memory processing means (21, 22),
- computing and verification means (20),
characterised in that:
- the broadcasting means (10) are so designed that at the instant at which a new televised scenario is initialised, a digital message addressed to the television viewers' individual devices (40, L1) is broadcast on a transmission channel (30) at the instant T1 and time-counting means (20) are initialised and triggered,
- the memory processing means (21, 22) are so designed that at the pre-determined instant T3, selected as being the instant at which the audience must no longer participate in the scenario, the value of the time counted is stored in memory and counting continues,
- the computing and verification means (20) are designed to receive the intervals Tr12 and Tr25 calculated by each participation device (40, L1) at the instant T5 , selected as being the instant at which each device is connected to the server, and verify the following relations:
Tr25 > Ta35
and Tr12 + Tr25 = Ta15 ± pre-determined tolerances,
where:
Tr25 is the time interval calculated by the device between T2 and T5,
Tr12 is the time interval calculated by the device between T1 and T2,
Ta35 is the time interval calculated by the device between T3 and T5,
Ta15 is the time interval calculated by the device between T1 and T5;
and reject the response from the respective television viewer if the relations are not verified.

## Patentansprüche

1. Geschütztes System für die Fernteilnahme an interaktiven Spielen, das einen Ausgabezentralserver (1) zur Ausgabe verschlüsselter Informationen, die durch Fernsehempfänger (40) während des Ablaufs des Fernsehprogramms empfangen werden, umfaßt und in welchem Zuschauer ein Spielgerät (40, L1) zum Lesen von Fernsehinformationen und zum Zurücksenden einer Antwort auf in den Informationen gestellte Fragen verfügen, dadurch gekennzeichnet, daß:
a) das Spielgerät (40, L1) umfaßt:
- Vorrichtungen zum Anzählen (100, 150) zweier aufeinanderfolgender Zeitintervalle, wobei das erste Interval Tr12 definiert wird durch den Moment T1 der Übertragung einer vom Zentralserver (1) abgeschickten Information und dem Moment T2 der Antwort des Zuschauers und das zweite Interval Tr25 definiert wird durch den Moment T2 der Antwort des Zuschauers und den Moment T5 der Ankunft der Antwort am Server (1),
- Vorrichtungen (30) zum Übertragen der Antwort mit den Ergebnissen der Abzählung an den Ausgabeserver (1),
b) der Server (1) umfaßt:
- Vorrichtungen zum Abzählen (20) eines Zeitintervalls Ta35, das definiert ist durch den Moment T3 der Beendigung der Antwort und durch den Moment T5 der Ankunft der Antwort, und eines Zeitintervalls Ta15, das definiert ist durch den Moment T1 der Übertragung der Information und den Moment T5 der Ankunft der Antwort,
- Vorrichtungen (20) zum Berechnen und Verifizieren, mit denen die folgenden Relationen verifizierbar sind:
Tr25 > Ta35
und Tr12 + Tr25 = Ta15 ± vorgegebene Toleranzen,
und zum Abnehmen der Antwort, wenn die Relationen nicht verifiziert wurden.

2. Geschütztes System zur Fernteilnahme an interaktiven Spielen nach Anspruch 1, dadurch gekennzeichnet, daß die Abzählvorrichtungen des Spielgerätes durch einen geschützten Mikroprozessor (100) umgesetzt werden, der durch einen Taktgeber (150) angesteuert wird, der ein Programm zum Abzählen von Taktimpulsen abarbeitet.

3. Geschütztes System zur Fernteilnahme an interaktiven Spielen nach Anspruch 1, dadurch gekennzeichnet, daß die Abzählvorrichtungen des Spielgerätes durch die Rechnervorrichtungen umgesetzt werden, die durch einen internen Taktgeber angesteuert werden, die ein Programm zum Abzählen der Taktimpulse abarbeiten.

4. Gerät zur Teilnahme an fernübertragenen Programmen und Bestätigung der Teilnahme an der Verbindung mit einem entfernten Server (1), das umfaßt:
- Vorrichtungen (30) zum Empfang von numerischen Informationen vom Server (1),
- Schnittstellenvorrichtungen (L1) zur Eingabe repräsentativer Daten für seine Teilnahme durch einen Teilnehmer,
- Vorrichtungen (30) zur Einrichtung einer Verbindung mit dem Server,
- wenigstens ein geschütztes elektronisches Bauelement (CS) mit einem Mikroprozessor (100) und eigenen Speichervorrichtungen (110, 120, 130),
- wenigstens eine Schaltung (150) zur Erzeugung von Taktsignalen,
dadurch gekennzeichnet, daß:
- die Vorrichtungen zum Empfang so ausgelegt sind, daß im Moment T1 eine numerische Information in vorgegebener Form empfangen wird und sie bei ihrem Empfang an den geschützten Mikroprozessor (100) weitergeleitet wird;
- der geschützte Mikroprozessor (100) so ausgelegt ist, daß er die Echtheit der Information bestätigt, um sie in seinem Speicher abzuspeichern und um die Abzählung der Zeiteinheiten durchzuführen, die ein Vielfaches der Periode des Taktsignals sind, das diesem durch die Schaltung (150) zur Erzeugung des Taktsignals zugeführt wird,
- die Schnittstellenvorrichtungen so ausgelegt sind, daß sie zu einem Moment T2 von dem das Gerät besitzenden Fernsehzuschauer die Daten seiner Teilnahme empfangen und sie an den geschützten Mikroprozessor (100) weiterleiten, der so ausgelegt ist, daß er diese in erforderlicher Form in seinem Speicher speichert und auch den Wert der Abzählung der Zeiten in diesem Moment speichert und dann das Intervall Tr12 zwischen T1 und T2 berechnet und abspeichert;
- der geschützte Mikroprozessor (100) so ausgelegt ist, daß er die Abzählung fortführt, bis das Gerät (40, L1) über die Vorrichtungen zur Einrichtung einer Verbindung (30) mit dem Server (1) in einem Moment T5 angeschlossen worden ist, und das Zeitinterval Tr25 zwischen T2 und T5 berechnet und abspeichert,
- der geschützte Mikroprozessor so ausgelegt ist, daß er nach der Einrichtung der Verbindung die gespeicherten Teilnahmedaten und Zeitintervalle Tr12 und Tr25 überträgt, so daß der Server bestätigt, ob die Intervalle kompatibel mit der richtigen Berechnung des Intervalls Ta15 zwischen T1 und T5 sind, und die Antwort zurückweist, wenn dies nicht der Fall ist.

5. Gerät (40, L1) zur Teilnahme an teleübertragenen Programmen nach Anspruch 4, dadurch gekennzeichnet, daß es Vorrichtungen zum Lesen einer Chipkarte (L1) und eine Chipkarte (C) umfaßt, wobei die Karte das geschützte Bauelement in Form eines Chips einer integrierten Schaltung (CS) mit einem Mikroprozessor (100) und Arbeits- und Programmspeichern (100, 110, 120) umfaßt.

6. Datenverarbeitungs-Servervorrichtung (1) zum Verwalten der Teilnahme einer Gruppe von Telezuschauer bei teleübertragenen Szenarien, wobei die Telezuschauern dafür über individuelle elektronische Geräte (40, L1) zur Teilnahme verfügen, die in der Lage sind, teleübertragene Informationen zu lesen und Antworten von den Telezuschauern auf in den Informationen gestellte Fragen zurückzuschicken, wobei die Vorrichtung (1) umfaßt:
- Vorrichtungen (20) zum Abzählen der Zeit,
- Vorrichtungen (10) zur Übertragung numerischer Informationen an individuelle elektronische Teilnahmegeräte (40, L1),
- Vorrichtungen (30) zur Einrichtung einer Verbindung mit individuellen elektronischen Teilnahmegeräten,
- Vorrichtungen (21, 22) zum Durchführen der Abspeicherung,
- Vorrichtungen zum Berechnen und Bestätigen (20), dadurch gekennzeichnet, daß:
die Vorrichtungen zur Übertragung (10) so ausgelegt sind, daß sie im Moment der Initialisierung eines neuen teleübertragenen Szenarios in dem Moment T1 durch einen geeigneten Übertragungskanal (30) eine numerische Information an die individuellen Geräte (40, L1) der Telezuschauer übermitteln und die Vorrichtungen (20) zum Zählen der Zeit initialisieren und auslösen;
die Vorrichtungen zum Durchführen der Abspeicherung (21, 22) so ausgelegt sind, daß sie in dem vorgegebenen Moment T3, der als der Moment ausgewählt wird, in dem die Gruppe nicht mehr an dem Szenario teilnehmen muß, den Wert der Abzählung der Zeit abspeichern und die Zählung fortführen;
die Vorrichtungen (20) zum Berechnen und Bestätigen so ausgelegt sind, daß sie die Intervalle Tr12 und Tr25, die durch jedes Teilnahmegerät (40, L1) berechnet wurden, in dem Moment T5, der als der Moment ausgewählt wurde, in dem die jeweiligen Geräte sich mit dem Server in Verbindung setzen, empfangen und die folgenden Relationen bestätigen:
Tr25 > Ta35
und Tr12 + Tr25 = Ta15 ± vorgegebene Toleranzen,
wobei:
Tr25 das durch das Gerät zwischen T2 und T5 berechnete Zeitintervall ist,
Tr12 das durch das Gerät zwischen T1 und T2 berechnete Zeitintervall ist,
Ta35 das durch den Server zwischen T3 und T5 berechnete Zeitintervall ist,
Ta15 das durch den Server zwischen T1 und T5 berechnete Zeitintervall ist; und
die Antwort des jeweiligen Telezuschauers ablehnen, wenn diese Relationen nicht bestätigt worden sind.
